# EUROPEAN PATENT APPLICATION

(11) **EP 2 523 074 A2**
(43) Date of publication of application: **14.11.2012**
(21) Application number: 12158236.5
(22) Date of filing: 06.03.2012
(51) Int. Cl.: G06F 3/033

(54) **A mouse with multiple operation modes**

(30) Priority: 08.04.2011 TW 100206251
(71) Applicant: Golden Emperor International, Ltd., New Tapei City 235 (TW)
(72) Inventor: Chang, Po, 235 New Taipei City (TW); Hsu, Yi-Chung, 235 New Taipei City (TW)
(74) Representative: Viering, Jentschura & Partner

(57) **Abstract**

A mouse (100) with multiple operation modes comprises a plurality of sensing modules (1, 2) with the same or different characteristics, for generating at least a movement record according to a movement status of the mouse (100) on a reference surface; a switching module (3), for providing a user to select an operation mode; and a controlling module (4), connected to the switching module (3), determining the movement record provided by at least one of the plurality of sensing modules (1, 2) to be the source of the cursor controlling signal according to the operation mode selected by the user. When the mouse (100) has a plurality of sensing modules (1, 2) with different characteristics, the mouse (100) can be more accurate, more stable, or faster for fitting in with different requirements such as high speed, accurately, or stability. Accordingly, it is more convenient for the user to use the mouse (100).

## Description

### BACKGROUND OF THE INVENTION

### 1. Field of the Invention

The present invention relates to an input device for a computer; in particular, to a mouse with multiple operation modes.

### 2. Description of Related Art

According to the proceeding of the development for technology, computing devices such as the personal computers (PC) or the notebooks have been convenient tools for human daily life or works. However, a computing device must be cooperated with an input device, such as a keyboard, a mouse, a trackball, or a game pad for executing the functions of the computing device, thus the user can use the computing device conveniently.

Take the mouse for example, the mouse is widely used to control the window interface of the computing device, and the mouse is one of the most important peripheral equipment for internet access. According to different use requirements such as playing game, browsing web pages, or drawing, the corresponding operation condition such as fast or accurate is needed for obtaining a better control. Therefore, mouse pads with different material are provided by manufacturers. For example, aluminum, cloth, plastic, or glass is used for making the mouse pad, and the mouse pad with a smooth surface provides the user to control the cursor faster, and the mouse pad with a rough surface provides the user to control the cursor more accurate.

When the user wants to modify the sensitivity of controlling the cursor, the user may replace the mouse pad and configure the sensitivity of controlling the cursor in the operation system (e.g. Windows). However, replacing the mouse pad may not enough for modifying the sensitivity, user usually have to make the mentioned configurations. And, it is non-convenient to replace the mouse pad for different use requirement.

Therefore, how to provide a mouse having both fast operation mode and accurate operation mode for the user to control the cursor more conveniently is an unsolved issue for the developer and the manufacturers.

### SUMMARY OF THE INVENTION

The object of the present invention is to provide a mouse with multiple operation modes which is cooperated with the structure design of a plurality of sensing modules with the same or different characteristics (e.g. light sensing, laser sensing, far-infrared sensing, laser Doppler sensing), and the signal processing of a switching module and a controlling module. When the mouse has a plurality of sensing modules with different characteristics, the mouse can be more accurate, more stable, or faster for fitting in with different requirements such as high speed, accurately, or stability. Accordingly, it is more convenient for the user to use the mouse.

In order to achieve the aforementioned objects, according to an embodiment of the present invention, a mouse with multiple operation modes is offered. The mouse with multiple operation modes is connected to an information processing unit for generating a cursor controlling signal to control a cursor of the information processing unit. The mouse comprises a plurality of sensing modules, for generating at least a movement record according to a movement status of the mouse on a reference surface; a switching module, for providing a user to select an operation mode; and a controlling module, connected to the switching module, determining the movement record provided by at least one of the plurality of sensing modules to be the source of the cursor controlling signal according to the operation mode selected by the user.

In order to achieve the aforementioned objects, according to an embodiment of the present invention, a mouse with multiple operation modes is offered. The mouse with multiple operation modes is connected to a information processing device, for generating a cursor controlling signal to control a cursor of the information processing device, the mouse with multiple switching mode comprising: a plurality of sensing modules, for generating a movement record according to a movement status of the mouse on a reference surface; and a controlling module, making the movement record provided by one of the plurality of the sensing modules to be the source of the cursor controlling signal according to a switching command outputted by the information processing device.

In summary, the mouse with multiple operation modes of the present invention is disposed with a plurality of sensing modules and can switches the proper sensing module to make the sensing process according to use requirements. When the plurality of sensing modules has different characteristics, the mouse can be more accurate or faster for fitting in with different requirements such as high speed, accurately, or stability. The user only have to operate the switching module for switching the operation mode, thereby it is more convenient for the user to use the mouse.

In order to further the understanding regarding the present invention, the following embodiments are provided along with illustrations to facilitate the disclosure of the present invention.

### BRIEF DESCRIPTION OF THE DRAWINGS

Fig. 1A shows a block diagram of a mouse with multiple operation modes according to an embodiment of the present invention;

Fig. 1B shows a block diagram of a mouse with multiple operation modes according to another one embodiment of the present invention;

Fig. 2A shows an appearance figure of a mouse with multiple operation modes according to an embodiment of the present invention;

Fig. 2B shows another one appearance figure of a mouse with multiple operation modes according to an embodiment of the present invention;

Fig. 2C shows another one appearance figure of a mouse with multiple operation modes according to an embodiment of the present invention;

Fig. 2D shows another one appearance figure of a mouse with multiple operation modes according to an embodiment of the present invention;

Fig. 3A shows an operating diagram of a mouse with multiple operation modes according to an embodiment of the present invention;

Fig. 3B shows another one operating diagram of a mouse with multiple operation modes according to an embodiment of the present invention;

Fig. 4A shows a schematic diagram of a mouse with multiple operation modes according to another one embodiment of the present invention;

Fig. 4B shows a schematic diagram of a mouse with multiple operation modes according to another one embodiment of the present invention;

Fig. 5A shows a schematic diagram of a mouse with multiple operation modes according to another one embodiment of the present invention;

Fig. 5B shows a schematic diagram of a mouse with multiple operation modes according to another one embodiment of the present invention;

Fig. 6 shows a flow diagram of a process for the movement record according to another embodiment of the present invention.

### DETAILED DESCRIPTION OF THE PREFERRED EMBODIMENTS

The aforementioned illustrations and following detailed descriptions are exemplary for the purpose of further explaining the scope of the present invention. Other objectives and advantages related to the present invention will be illustrated in the subsequent descriptions and appended drawings.

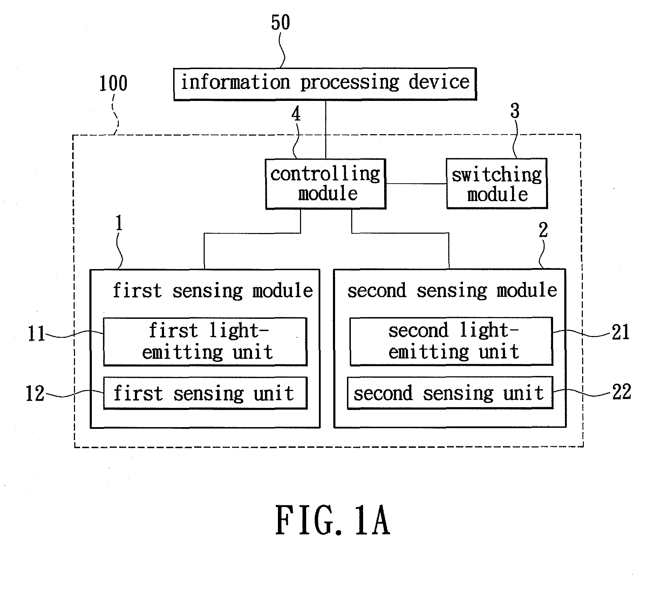

Please refer to Fig. 1A, Fig. 1A shows a block diagram of a mouse with multiple operation modes according to an embodiment of the present invention. The mouse 100 is connected to the information processing device 50. The mouse 100 is used to generate a cursor controlling signal for controlling a cursor of the information processing device 50. The connection between the mouse 100 and the information processing device 50 can be accomplished through wired transmission or wireless transmission. If the wireless transmission is adapted for the connection, a wireless communication module should be disposed in the mouse 100 and a corresponding wireless communication module should be disposed in the information processing device 20. The implementation manner of wireless communication modules are well known in the art, thus there is no need to go into details.

The information processing device 50 can be a personal digital assistant (PDA), a personal computer, a notebook, or a tablet personal computer. The mouse 100 comprises a first sensing module 1, a second sensing module 2, a switching module 3, and a controlling module 4, wherein the controlling module 4 is connected to the first sensing module 1, the second sensing module 2, and the switching module 3 separately.

The first sensing module 1 is used to generate a movement record according to a movement of the mouse 100 on a reference surface (e.g. a mouse pad). The first sensing module 1 can be a visible light sensing module, non-visible light sensing module, or a roller sensing module. The first sensing module 1 comprises a first light-emitting unit 11 and a first sensing unit 12. The first light-emitting unit 11 is used to generate a light to project onto the reference surface. The first light-emitting unit 11 can be, for example, a laser diode or a light-emitting diode. The first sensing unit 12 is used to receive a light signal reflected by the reference surface and to generate at least a movement record.

The second sensing module 2 is used to generate at least a movement record according to a movement of the mouse 100 on a reference surface (e.g. a mouse pad). The second sensing module 2 can be a visible light sensing module, non-visible light sensing module, or a roller sensing module. The second sensing module 2 comprises a second light-emitting unit 21 and a second sensing unit 22. The second light-emitting unit 21 is used to generate a light to project onto the reference surface. The second light-emitting unit 21 can be, for example, a laser diode or a light-emitting diode. The second sensing unit 22 is used to receive a light signal reflected by the reference surface and to generate at least a movement record. Additionally, the number of the sensing module for the mouse 100 of this embodiment is an example for explaining, the invention is not restricted thereto. The number of the sensing module can be more than two.

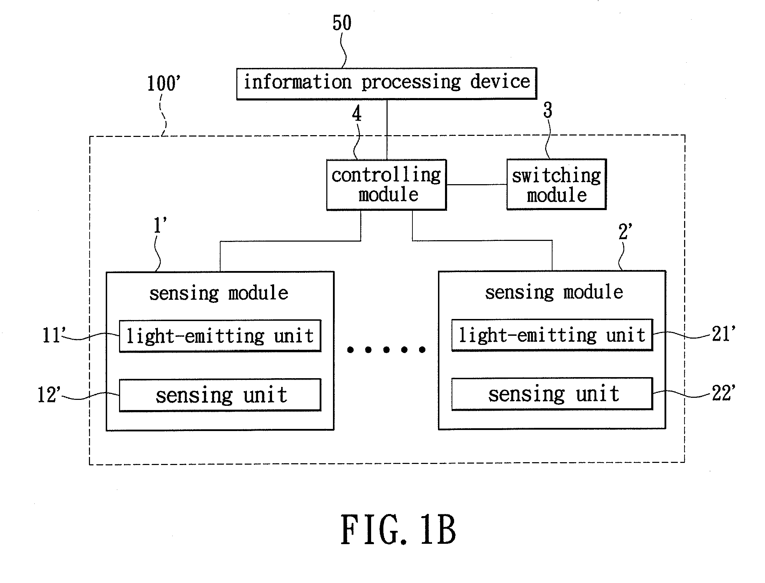

Please refer to Fig. 1B, there can be a plurality of sensing modules disposed between the sensing module 1' and the sensing module 2' shown in Fig. 1B, and the plurality of sensing modules are connected to the controlling module 4 separately. The plurality of sensing modules may be the same or not the same. For example, the sensing modules may be a light sensor, a laser sensor, a far-infrared sensor, or a laser Doppler sensor ... etc. The characteristics of the sensing modules may comprise (but not restricted to) the light sensing, the laser sensing, the far-infrared sensing, the laser Doppler sensing ... etc. In other words, the mouse 100' of this embodiment can be disposed with more than two sensing modules. The aforementioned sensing module 1', the sensing module 2' and the other sensing modules can have the same or different characteristics (for example, resolution) according to the light-emitting unit installed in each of the sensing modules. For example, when the resolution of the sensing module 1' is 800 dpi ∼ 1600 dpi, the resolution of the sensing module 2' can be 400 dpi ∼ 800 dpi, 800 dpi ∼ 1600 dpi, or other ranges of resolution. And, the resolution of other sensing modules can be 400 dpi ∼ 800 dpi, 800 dpi ∼ 1600 dpi, or other ranges of resolution. Accordingly, the mouse may fit in with varies use requirements. It is worth mentioning that the difference in characteristic such as the difference of resolution (e.g. dpi) is just for explaining, and the difference of characteristics for the sensing modules in not restricted thereto.

Please refer to Fig. 1A again; the switching module 3 is used to select an operation mode for a user (human operator). The operation mode may comprise a single-sensing operation mode and a multiple-sensing operation mode. The single-sensing operation mode means that the first sensing module 1 or the sensing module 2 makes the sensing process to generate a movement record correspondingly. When the first sensing module 1 is designated to make the sensing process, the second sensing module 2 can be turned off for saving the power. Similarly, when the second sensing module 2 is designated to make the sensing process, the first sensing module 1 can be turned off for saving the power. The multiple-sensing operation mode means the first sensing module 1 and the second sensing module 2 make the sensing process together to generate the corresponding movement record.

The switching module 3 can be, for example, a multistage dip switch, a push button, or the switching module 3 may comprise a plurality of buttons for being the multiplex push buttons. When the switching module 3 is a multistage dip switch, the controlling module 4 determines the operation mode according to the configuration of the multistage dip switch. When the switching module 3 is a push button, the controlling module 4 determines the operation mode according to the pushed times of the push button. When the switching module 3 has a plurality of buttons for being the multiplex push buttons, the controlling module 4 determines the present operation mode according to the pushed sequence, the pushed time point, or the pushed times for these buttons. The user can configure the multiplex push buttons to define which of these buttons are for triggering the switching of the operation mode.

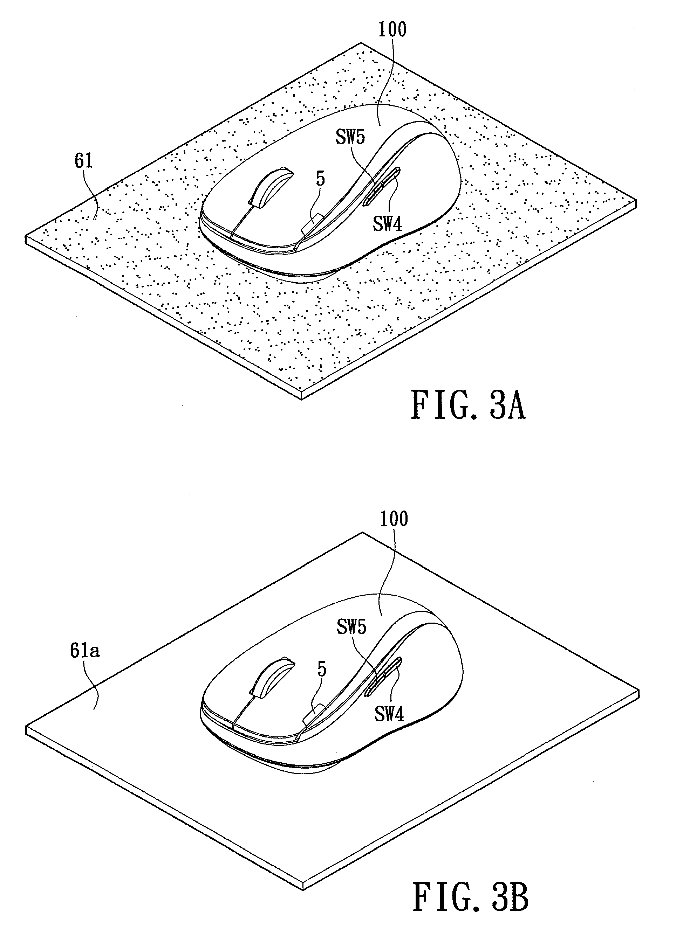

For example, for the fourth switch SW4 and the fifth switch SW5 in Fig. 3A, the user can push the fourth switch SW4 or the fifth switch SW5 to make the switch of the operation mode, and the indicating interface 5 can indicate the present operation mode. Or, an side button (e.g. the fourth switch SW4 or the fifth switch SW5) is added and adhered to the left-button of the mouse 100, the user can press the side button for 3 seconds for starting the switching mode, and the indicating interface 5 indicates the present operation mode, thereby the user can push the left-button of the mouse 100 to switch to a new (or another) operation mode.

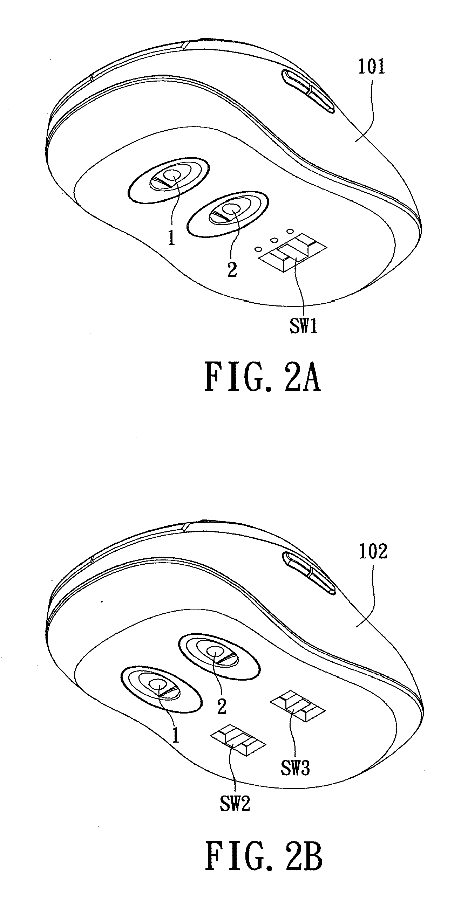

Please refer to Fig.1A and Fig. 2A, Fig. 2A shows an appearance figure of a mouse with multiple operation modes according to an embodiment of the present invention. A first sensing module 1, a second sensing module 2, and a first switch SW1 are disposed on a bottom surface of the mouse 101. The first sensing module 1 and the second sensing module 2 are one after another as shown in Fig. 2A, but the positions of the first sensing module 1 and the second sensing module 2 are not restricted thereto. The first switch SW1 is a multistage dip switch. When the switching module 3 is a multistage dip switch, the controlling module 4 determines the present operation mode according to the configuration of the multistage dip switch selected by the user. A printed letter, a printed word, a printed pattern or a carved sculpture near to the first switch SW1 can indicate the corresponding operation mode. For example, when the first switch SW1 is switched to the left position, it represents the operation mode is switched to the single-sensing mode, and the first sensing module 1 would make the sensing process; when the first switch SW1 is switched to the middle position, it represents the operation mode is switched to the multiple-sensing mode, and the first sensing module 1 and second sensing module 2 would make the sensing process together; when the first switch SW1 is switched to the right position, it represents the operation mode is switched to the single-sensing mode, and the second sensing module 2 would make the sensing process, but the invention is not restricted thereto. The switch positions for the operation modes and the corresponding sensing modules are just for explaining. Additionally, the first switch SW1 can be disposed on the top surface or the side surface of the mouse 101, but the position of the first switch SW1 is not restricted thereto.

Please refer to Fig. 1A and Fig. 2B, Fig. 2B shows another one appearance figure of a mouse with multiple operation modes according to an embodiment of the present invention. A first sensing module 1, a second sensing module 2, a second switch SW2 and a third switch SW3 are disposed on the bottom surface of the mouse 102. The positions of the first sensing module 1 and the second sensing module 2 are arranged to be side by side, the positions may be tilted with an angle, but the positions are not restricted thereto. The second switch SW2 and the third switch SW3 can be multistage dip switches, and the second switch SW2 controls to turn-on or turn-off the first sensing module 1, and the third switch SW3 controls to turn-on or turn-off the second sensing module 2. For example, when the second switch SW2 is switched to the front side (for example, ON) and the third switch SW3 is switched to the rear side (for example, OFF), it represents the operation mode is the single-sensing mode, and the first sensing module 1 makes the sensing process; when the second switch SW2 is switched to the front side (for example, ON) and the third switch SW3 is switched to the front side (for example, ON), it represents the operation mode is the multiple-sensing mode, and the first sensing module 1 and the second sensing module 2 make the sensing process together; when the second switch SW2 is switched to the rear side (for example, OFF) and the third switch SW3 is switched to the front side (for example, ON), it represents the operation mode is the single-sensing mode, and the second sensing module 2 makes the sensing process, but the invention is not restricted thereto. The switch positions for the operation modes and the corresponding sensing modules are just for explaining. Additionally, the second switch SW2 and the third switch SW3 can be disposed on the top surface or the side surface of the mouse 102, but the positions of the second switch SW2 and the third switch SW3 are not restricted thereto.

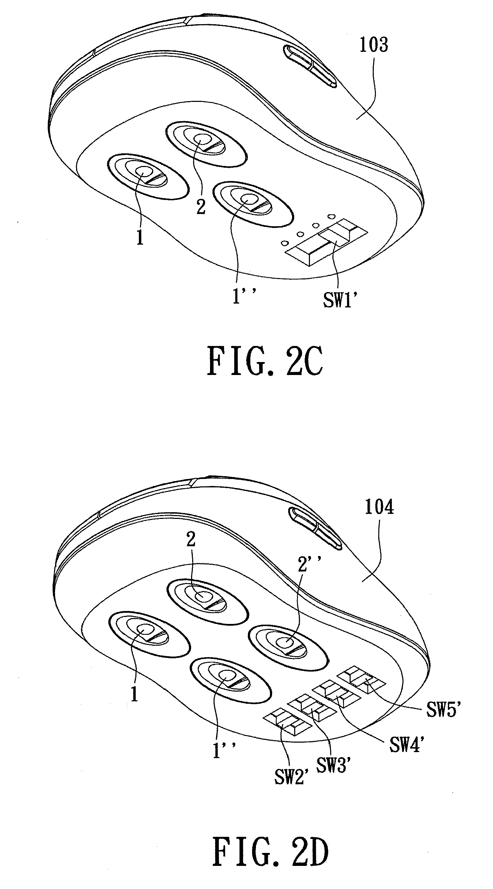

Please refer to Fig. 2C, the first sensing module 1, the second sensing module 2, and a third sensing module 1" with the same or different characteristics are disposed on the bottom surface of a mouse 103. The first sensing module 1, the second sensing module 2, and the third sensing module 1" are selected to make the sensing process independently or together by switching of the first switch SW1', and the switching manner may be similarly to the switching of the multistage dip switch for multiple sensing modules shown in Fig. 2A, thus the redundant information is not repeated. Additionally, the number of the sensing modules disposed on the mouse 103 is for exemplary, and the number of the sensing modules may be more than three.

Please refer to Fig. 2D, the first sensing module 1, the second sensing module 2, the third sensing module 1", and a fourth sensing module 2" with the same or different characteristics are disposed on the bottom surface of a mouse 104. The first sensing module 1, the second sensing module 2, the third sensing module 1", and the fourth sensing module 2" are controlled by the second switch SW2', the third switch SW3', the fourth switch SW4', and the fifth SW5' for having the first sensing module 1, the second sensing module 2, the third sensing module 1", and the fourth sensing module 2" make the sensing process together or independently. The switching manner, similar to the manner shown in Fig. 2B, may be a switch corresponding to a sensing module, however, the positions of the switches and the sensing modules, the relations between the switches and the sensing modules are not restricted thereto. Additionally, the number of the sensing modules disposed on the mouse 104 is for exemplary, and the number of the sensing modules may be more than four.

Please refer to Fig. 1A again; the controlling module 4 is connected to the first sensing module 1, the second sensing module 2, and the switching module 3 separately. The controlling module 4 determines the movement record provided by at least one of the first sensing modules 1 and the second sensing module 2 to be the source of the cursor controlling signal according to the operation mode (e.g. single-sensing operation mode or multiple-sensing operation mode) selected by the user. In the single-sensing operation mode, controlling module 4 makes the movement record generated by the sensing module (e.g. the first sensing module 1 or the second sensing module 2) corresponding to the single-sensing operation mode to be a cursor controlling signal. In the multiple-sensing operation mode, the controlling module 4 makes an operation process with a plurality of movement records generated by the sensing modules (e.g. the first sensing module 1 and the second sensing module 2) corresponding to the multiple-sensing operation mode to generate the cursor controlling signal.

Furthermore, apart from hardware (e.g. push buttons), switching the operation mode by software or a graphic user interface (GUI) is also provided by the mouse 100 of this invention. In other words, the switching module 3 can comprise a graphic user interface or the software for switching the operation mode. For example, the switching module 3 can be neglected or disabled, and the controlling module 4 determines the movement record provided by at least one of the first sensing modules 1 and the second sensing module to be the source of the cursor controlling signal according to a switching command outputted by the information processing device 50. The controlling module 4 can be, for example, a Micro-controller Unit (MCU), and the micro-controller unit has a timer, a Random Access Memory (RAM), a Read Only Memory (ROM), a Central Process Unit (CPU), an accumulator, an Input/Output interface (I/O), and other computer functions. Accordingly, the movement record can be operated to generate the cursor controlling signal to the information processing unit 50.

The mouse 100 of the invention also provides an advantage of redundancy. For example, in the multiple-sensing operation mode, when the movement record independently provided by the first sensing module 1 or the second sensing module 2 has a relative large variations, it maybe the hardware of the first sensing module 1 or the second sensing module 2 is failure, or contaminated by the dust, meanwhile the controlling module 4 makes an optimal signal processing and abandons the movement record with the most variations to make ensure the control quality of the mouse 100. In other words, the mouse 100 can still operate normally when one of the sensing modules is failure or defective. When one of the first sensing module 1 and the second sensing module 2 is failure, the function of the mouse 100 can be maintained according to enable (or switch to) the sensing module still working. Accordingly, the control stability of the mouse 100 can be improved.

Please refer to Fig. 3A, Fig. 3A shows an operating diagram of a mouse with multiple operation modes according to an embodiment of the present invention. When the user want to make a more accurate cursor controlling operation (e.g. drawing), the user can put the mouse 100 on a mouse pad 61 with a first material on the surface (e.g. the rough or checked surface) and switches the operation mode by pushing the fourth switch SW4 or the fifth switch SW5 to select at least one sensing module with proper resolution. Additionally, the switch maybe make by only a push button according to design considerations.

Please refer to Fig. 3B, Fig. 3B shows another one operating diagram of a mouse with multiple operation modes according to an embodiment of the present invention. When the user want to make a fast responding cursor controlling operation (e.g. playing a game), the user can put the mouse 100 on a mouse pad 61 a with a second material on the surface (e.g. the smooth or polished surface) and switches the operation mode by pushing the fourth switch SW4 or the fifth switch SW5 to select at least one sensing module with proper resolution. Besides, another surface of the mouse pad 61a can be the mouse pad 61.

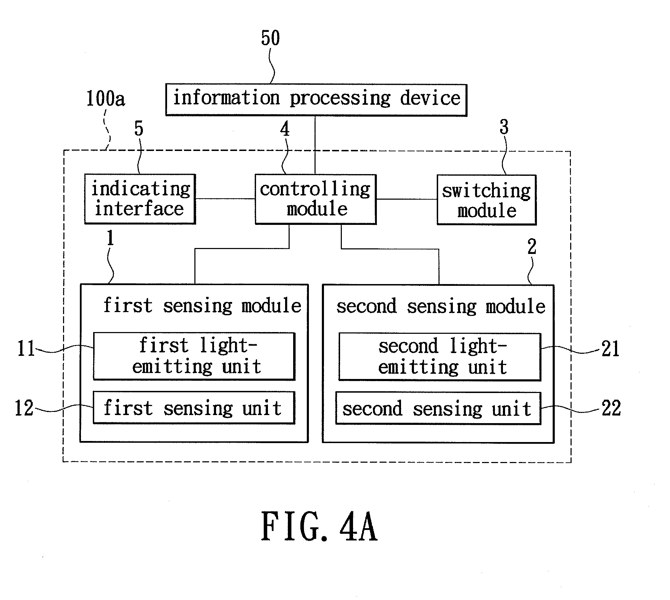

Please refer to Fig. 4A, Fig. 4A shows a schematic diagram of a mouse with multiple operation modes according to another one embodiment of the present invention. The mouse 100a comprises an indicating interface 5, and the other components of the mouse 100a are significantly identical to the previous embodiment, thus the redundant information is not repeated. The indicating interface 5 is connected to the controlling module 4. The indicating interface 5 is controlled by the controlling module 4 to generate a status signal for indicating the operation mode according to a pushed operation of the switch module 3 (e.g. a push button). The indicating interface 5 can be a display interface (e.g. LED pattern or a letter displayer) or a sound output interface, but the invention is not restricted thereto.

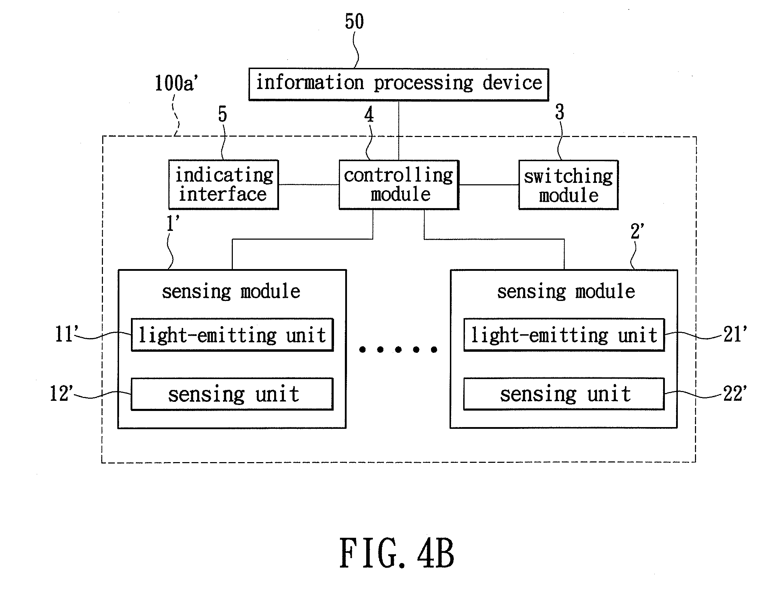

Please refer to Fig. 4B, the mouse 100a'may be disposed with a plurality of sensing modules (including the sensing module 1' and the sensing module2') with the same or different characteristics. In other words, the mouse 100a' may be disposed with more than two sensing modules, and the sensing module 1', the sensing module 2' and the plurality of sensing modules may have the same or different characteristics according to the light-emitting unit installed in each of the sensing modules for fitting in with use requirements.

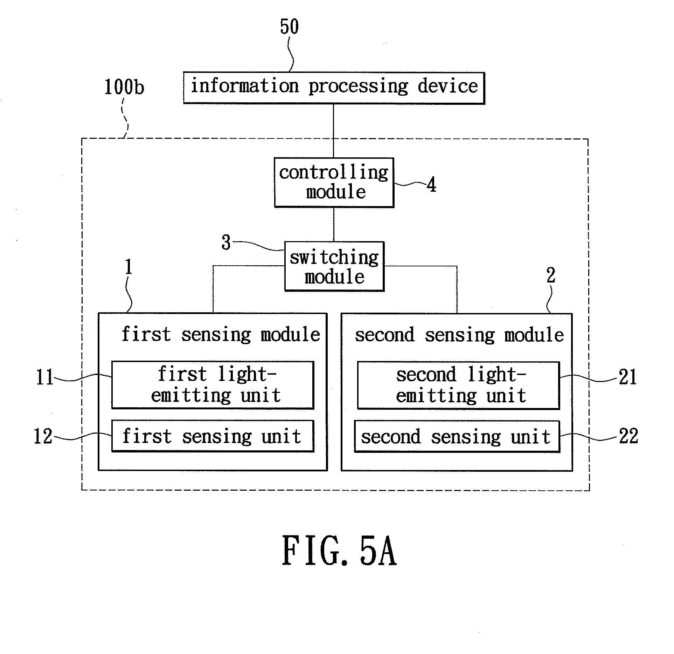

Please refer to Fig. 5A, Fig. 5A shows a schematic diagram of a mouse with multiple operation modes according to another one embodiment of the present invention. The switching module 3 of the mouse 100b is connected to the switching module 3 and disposed between the sensing module 1' and the sensing module 2'. Other components of the mouse 100b is identical to the previous embodiment, thus the redundant information is not repeated. In other words, the first sensing module 1 and the second sensing module 2 transmit the movement records to the controlling module 4 through the switching module 3.

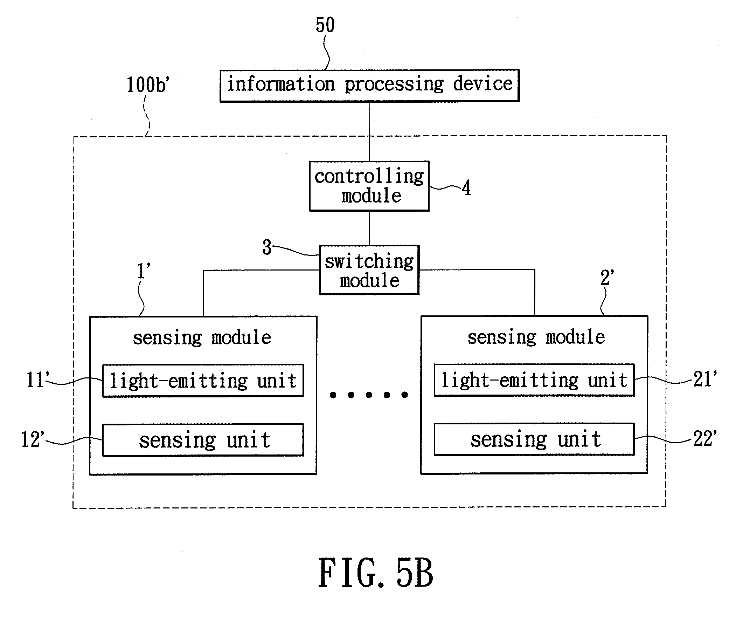

Please refer to Fig. 5B, a plurality of switching modules with the same or different characteristics can be disposed between the sensing module 1' and the sensing module 2'. In other words, the mouse 100b' can be disposed with more than two sensing modules, and the sensing module 1', the sensing module 2' and the plurality of sensing modules can have the same or different characteristics according to the light-emitting unit installed in each of the sensing modules for fitting in with use requirements.

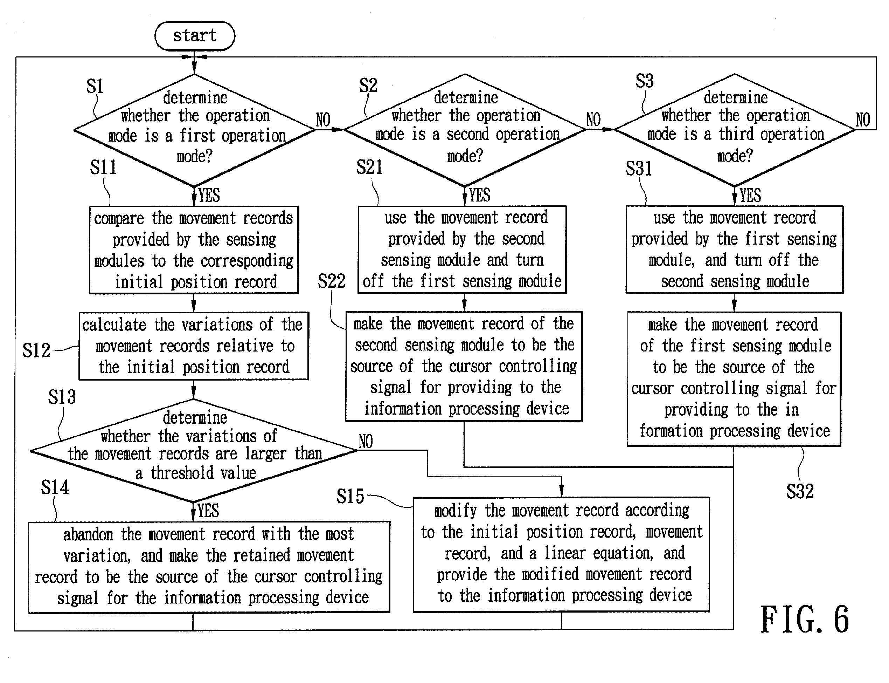

Please refer to Fig.6, Fig. 6 shows a flow diagram of a process for the movement record according to another embodiment of the present invention. In step S1, the controlling module 4 determines whether the operation mode is a first operation mode (e.g. the multiple-sensing operation mode) through the switching module 3. If the operation mode is not the first operation mode, then go to the step S2; otherwise, go to the step S1. In step 11 the controlling module 4 compares the movement records provided by the first sensing module 1 and the second sensing module 2 (e.g. the position in X-axis and Y-axis) to the corresponding initial position record.

In step S12, the controlling module 4 calculates the variations of the movement records provided by the first sensing module 1 and the second sensing module 2 relative to the initial position record. In step S13, the controlling module 4 determines whether the variations of the movement records are larger than a threshold value. The threshold value can be established or amended by the user through a human-machine interface (not shown in the figure), or stored in the controlling module 4 or the information processing device 50 previously. If the variations of the movement records are larger than the threshold value, then go to the step S14; otherwise, go to the step S15. In step S14, the controlling module 4 abandons the movement record with the most variation, and makes the retained movement record to be the source of the cursor controlling signal for the information processing device 50.

In step S15, the controlling module 4 modifies the movement record according to the initial position record, movement record, and a linear equation, and provides the modified movement record to the information processing device 50. The mentioned linear equation can be realized by making a linear prediction by adapting a linear regression model and the theorem of trigonometric functions, or be realized by analysis method such as Mean Square Error (MSE), Mean Absolute Error (MAD), or Sun of Absolute Error (SAD). Then, go back to the step S1 to repeat the process.

In step S2, when the controlling module 4 determines the operation mode is not the first operation mode through the switching module 3, the controlling module 4 determines whether the operation is a second operation mode (e.g. the single-sensing operation mode). If the operation mode is not the second operation mode, then go to the step S3; otherwise, go to the step S21. In step S21, the controlling module 4 uses the movement record provided by the second sensing module 2 and turns off the first sensing module 1 for saving the power consumption of the mouse 100. Then, in step S22, the controlling module 4 makes the movement record of the second sensing module 2 to be the source of the cursor controlling signal for providing to the information processing device 50.

Similarly, in step S3, the controlling module 4 determines whether the operation mode is a third operation mode (e.g. the single-sensing operation mode). If the operation mode is not the third operation mode, then go back to the step S1; otherwise, go to the step S31. In step S31, the controlling module 4 uses the movement record provided by the first sensing module 1, and turns off the second sensing module 2 for saving the power consumption of the mouse 100. Then, in step S32, the controlling module 4 makes the movement record of the first sensing module 1 to be the source of the cursor controlling signal for providing to the in formation processing device 50.

In summary, the mouse with multiple operation modes of the present invention is disposed with a plurality of sensing modules and switches the proper sensing module to make the sensing process according to use requirements. When the sensing modules with different characteristics are combined together, the mouse can be more accurate or be faster for fit in with different operation situations. Additionally, the user can switch the operation mode by operating the switching module; it is convenient for the user.

The descriptions illustrated *supra* set forth simply the preferred embodiments of the present invention; however, the characteristics of the present invention are by no means restricted thereto. All changes, alternations, or modifications conveniently considered by those skilled in the art are deemed to be encompassed within the scope of the present invention delineated by the following claims.

## Claims

1. A mouse (100) with multiple operation modes, connected to a information processing device (50), for generating a cursor controlling signal to control a cursor of the information processing device (50), the mouse (100) with multiple switching modes including:
a plurality of sensing modules (1, 2), for generating at least a movement record according to a movement status of the mouse (100) on a reference surface;
a switching module (3), for providing a user to select an operation mode; and
a controlling module (4), connected to the switching module (3), determining the movement record provided by at least one of the plurality of sensing modules (1, 2) to be the source of the cursor controlling signal according to the operation mode selected by the user.

2. The mouse (100) with multiple operation modes according to claim 1, wherein the operation mode is a single-sensing operation mode, the controlling module (4) makes the movement record generated by the sensing module (1, or 2) corresponding to the single-sensing operation mode to be the cursor controlling signal.

3. The mouse (100) with multiple operation modes according to claim 2, wherein the operation mode is a multiple-sensing operation mode, the controlling module makes an operation process with a plurality of movement records generated by the plurality of sensing modules (1, 2) corresponding to the multiple-sensing operation mode to generate the cursor controlling signal.

4. The mouse (100) with multiple operation modes according to claim 1, wherein the switching module (3) is a multistage dip switch, the controlling module (4) determines the operation mode according to the configuration of the multistage dip switch.

5. The mouse (100) with multiple operation modes according to claim 3, wherein the switching module (3) is a multistage dip switch, the controlling module (4) determines the operation mode according to the configuration of the multistage dip switch.

6. The mouse (100) with multiple operation modes according to claim 1, wherein the switching module (3) is a push button, the controlling module (4) determines the operation mode according to the pushed times of the push button.

7. The mouse (100) with multiple operation modes according to claim 3, wherein the switching module (3) is a push button, the controlling module (4) determines the operation mode according to the pushed times of the push button.

8. The mouse (100) with multiple operation modes according to claim 6, further including:
an indicating interface (5), controlled by the controlling module (4) to generate a status signal according to the pushed operation of the push button, for indicating the operation mode.

9. The mouse (100) with multiple operation modes according to claim 1, wherein the switching module (3) has a plurality of buttons for being the multiplex push buttons, the controlling module (4) determines the operation mode according to the pushed sequence, the pushed time point, or the pushed times for the plurality of buttons, the multiplex push buttons can be configured to define which of these buttons are for triggering the switching of the operation mode.

10. The mouse (100) with multiple operation modes according to claim 3, wherein the switching module (3) has a plurality of buttons for being the multiplex push buttons, the controlling module (4) determines the operation mode according to the pushed sequence, the pushed time point, or the pushed times for the plurality of buttons, the multiplex push buttons can be configured to define which of these buttons are for triggering the switching of the operation mode.

11. The mouse (100) with multiple operation modes according to claim 1, wherein the switching module (3) comprises a plurality of dip switches, each dip switch corresponds to one of the plurality of sensing modules (1, 2) for the controlling module (4) to determine the source of the cursor controlling signal according to the configuration of each of the plurality of the dip switches.

12. The mouse (100) with multiple operation modes according to claim 3, wherein the switching module (3) comprises a plurality of dip switches, each dip switch corresponds to one of the plurality of sensing modules (1, 2) for the controlling module (4) to determine the source of the cursor controlling signal according to the configuration of each of the plurality of the dip switches.

13. The mouse (100) with multiple operation modes according to claim 1, wherein the sensing module (1, or 2) is a visible light sensing module, non-visible light sensing module, or a roller sensing module.

14. The mouse (100) with multiple operation modes according to claim 3, wherein the sensing module (1, or 2) is a visible light sensing module, non-visible light sensing module, or a roller sensing module.

15. The mouse (100) with multiple operation modes according to claim 1, wherein the switching module (3) comprises a graphic user interface (GUI) or the software for switching the operation mode.

16. A mouse (100) with multiple operation modes, connected to a information processing device (50), for generating a cursor controlling signal to control a cursor of the information processing device (50), the mouse (100) with multiple switching modes comprising:
a plurality of sensing modules (1, 2), for generating a movement record according to a movement status of the mouse (100) on a reference surface; and
a controlling module (4), making the movement record provided by one of the plurality of the sensing modules (1, 2) to be the source of the cursor controlling signal according to a switching command outputted by the information processing device (50).
